# EUROPÄISCHE PATENTANMELDUNG

(11) **EP 0 791 454 A2**
(43) Veröffentlichungstag der Anmeldung: **27.08.1997**
(21) Anmeldenummer: 97102052.4
(22) Anmeldetag: 10.02.1997
(51) Int. Cl.: B32B 17/10, C03C 27/12

(54) **Verbundmaterial**

(30) Priorität: 21.02.1996 DE 19606386
(71) Anmelder: BAYER AG, 51368 Leverkusen (DE)
(72) Erfinder: Claussen, Uwe, Dr., 51379 Leverkusen (DE); Müller, Hanns Peter, Dr., 51519 Odenthal (DE); Uerdingen, Walter, Dr., 51375 Leverkusen (DE)

(57) **Zusammenfassung**

Ein Verfahren, wonach man eine Farbstoffolie gießt, die Folie vom Substrat abzieht und monoaxial reckt, die gereckte Folie auf eine Glasfolie aufbringt und das erhaltene Laminat bei erhöhter Temperatur tempert, führt zu Verbundmaterialien, die sich hervorragend zur Herstellung optoelektronischer Instrumente eignen.

## Beschreibung

Die Erfindung betrifft ein Verbundmaterial aus Glas und optisch anisotroper Polymerfolie, ein Verfahren zur Herstellung dieses Verbundmaterials und seine Verwendung zur Herstellung optoelektronischer Elemente, wie z.B. LCDs (= Liquid Crystal Displays).

Die Funktion von LCDs beruht auf dem Zusammenwirken von optisch anisotropen Schichten (meistens in Form sogenannter Polarisationsfolien), die beim Durchtritt von Licht dieses linear polarisieren, und Flüssigkristallschichten. Durch Anlegen elektrischer Spannung läßt sich der Brechungsindex der Flüssigkristallschicht ändern; diese Änderung bewirkt eine Drehung der Schwingungsebene des polarisierten Lichts, und diese Drehung führt dann bei geeigneter Anordnung von Flüssigkristallschicht und optisch anisotroper Schicht zu einer Änderung der Hell- oder Dunkelwirkung. Wird beispielsweise eine Flüssigkristallschicht zwischen zwei parallel zueinander ausgerichteten Polarisationsfolien eingeschlossen, erscheint je nach Orientierung der Schwingungsebene des linear polarisierten Lichts, also in Abhängigkeit von der örtlichen Doppelbrechung, die Anordnung ortsaufgelöst heller oder dunkler.

In der heutigen Praxis werden die die Flüssigkristallschicht enthaltenden Zellen und die Polarisationsfolien getrennt gefertigt, und anschließend werden die Polarisationsfolien als Flachpolarisatoren auf die Glasoberflächen dieser Zellen geklebt.

Die derzeit gebräuchlichsten Polarisationsfolien sind Iodfolien, die Iod als lichtpolarisierendes Agens enthalten und dichroitische Verhältnisse von über 50 besitzen können. Das dichroitische Verhältnis D einer Verbindung ist durch den Quotienten Eₚₐᵣₐₗₗₑₗ/E_{senkrecht} gekennzeichnet. Hierbei bedeutet E die Extinktion und der Index "parallel", daß die Ausrichtung des polarisierten Lichts und der Übergangsmomente der Chromophore parallel liegen. In diesem Zustand tritt die maximale Adsorption ein. Der Index "senkrecht" bedeutet entsprechend, daß die beiden Richtungen senkrecht zueinander angeordnet sind und die Extinktion minimal wird. D ist von der Konzentration unabhängig. Die Iodfolien werden üblicherweise durch Diffusion von Iod aus einer wäßrigen Lösung, in der das Iod monomer und isotrop vorliegt, in die Oberfläche einer gereckten und daher geordneten ungefärbten Polymerfolie, vorzugsweise aus Polyvinylalkohol, hergestellt. Das Iod polymerisiert dabei kettenförmig unter Bildung eines anisotropen Körpers und verändert dabei seine Eigenschaften einschließlich seiner Diffusionsfähigkeit sprunghaft. Deshalb erhält man ein sehr steiles Konzentrationsgefälle von der Oberfläche ins Innere der Folie. Dieses Verfahren erzeugt also Folien, von denen nur die Außenschichten angefärbt werden, d.h. die Farbtiefe ist unabhängig von der Foliendicke. Typische handelsübliche Iod-haltige Polarisationsfolien der Spitzenklasse weisen bei Dicken von 20 bis 40 µm Iod-haltige Schichten einer Dicke von unter 5 µm auf, d.h. der größte Teil der Folie ist bei der Erzeugung polarisierten Lichts unwirksam; er dient quasi nur als Trägermaterial.

Damit die Folien durch das Iodierungsbad transportiert werden können, müssen sie den dabei auftretenden mechanischen Belastungen standhalten. Einfluß auf die mechanische Stabilität hat neben der durch Reckung erhöhten Zugfestigkeit in erster Linie die Dicke der Folie; man kann also eine bestimmte Dicke nicht unterschreiten, wenn die Folien selbsttragend sein sollen. Andererseits ist man bestrebt, die Foliendicke zu minimieren, um unerwünschte Effekte wie Lichtstreuung und -brechung weitgehend zu vermeiden.

Iodfolien haben den Nachteil, daß die Iodketten eine geringe Beständigkeit gegen trockene und vor allem gegen feuchte Wärme besitzen: Die Iodketten brechen, so daß Iodfolien unzureichende Echtheiten besitzen. Man kann sie deshalb weder heiß verarbeiten noch dauernd im Freien betreiben. Coloristisch ist von Belang, daß die graublaue Farbe des Iods grundsätzlich nicht variiert werden kann und bei Abbau während der Alterung eine Nuancenverschiebung erleidet.

Die Probleme der Iodfolien weisen Farbstoffolien größtenteils nicht auf. Man verwendet dafür Farbstoffe, die bereits von Anfang an optisch anisotrop (dichroitisch) sind. Farbstoffolien lassen sich nach dem gleichen Diffusionsfärbeprozeß wie die Iodfolien herstellen, wobei sich die Farbstoffe in die gequollenen Bereiche der gereckten und damit geordneten Polymerfolien einlagern. Weil sich dabei keine sprunghaften Eigenschaftsunterschiede ergeben, lassen sich tief gefärbte Polarisationsfolien hoher Polarisationsleistung mit diesem Verfahren bisher nicht herstellen.

Für die mechanischen Belastungen der Folien im Färbebad gilt das oben für die Iodfolien Gesagte analog. Eine theoretische Möglichkeit der Herstellung dünner, gleichmäßig durchgefärbter Farbstoffolien ist das Gießverfahren. Es erlaubt beliebige Farbdichten und sehr gute, den Iodfolien vergleichbare dichroitische Werte. Der makroskopisch wahrnehmbare Dichroismus wird dabei durch das Recken der gefärbten Folie hervorgerufen. Allerdings läßt sich durch einfaches Recken kein formbeständiges Material erzeugen, sofern die Folien sehr dünn sind; vielmehr braucht man eine zusätzliche Temperung zur Fixierung des gereckten Zustands. Bei sehr dünnen Folien führt dieses Tempern aber zu extremer Sprödigkeit und infolgedessen zu einer unerwünscht geringen Reißfestigkeit. Derartig behandelte Folien lassen sich nur mit größten Schwierigkeiten handhaben.

Ein an sich aussichtsreicher Weg, ein flexibles Grundmaterial für eine kontinuierliche Herstellung von LCD-Zellen herzustellen, war der Versuch, das Glas durch einen geeigneten Kunststoff zu ersetzen. Es hat sich jedoch gezeigt, daß Kunststoffe bei langem Kontakt mit Flüssigkristallen, insbesondere bei höherer Temperatur, nicht beständig genug sind.

Aufgabe der Erfindung war also, ein Verfahren zur Herstellung von Polarisationsfolien bereitzustellen, die die Mindestanforderungen an mechanische, thermische und chemische Belastbarkeit erfüllen.

Gegenstand der Erfindung ist ein Laminat aus
A. Glasfolie einer Dicke von 10 bis 200, vorzugsweise 20 bis 100 µm und
B. einer dichroitischen Farbstoffolie einer Dicke von 5 bis 60, vorzugsweise 8 bis 30 µm, deren Extinktion im linear polarisierten Licht, gemessen an zwei übereinanderliegenden Folien im Absorptionsmaximum, bei aufeinander senkrecht stehenden optischen Achsen 0,1 bis 6,0, vorzugsweise 2,0 bis 4,5, und bei parallelen optischen Achsen 0,03 bis 0,2 beträgt.

Die Glasfolie A besteht aus Mineralglas; sie kann alkalifrei sein, was wegen der elektrischen Eigenschaften bevorzugt ist.

Bei dem organischen Polymer handelt es sich um eines, das transparente Filme bildet, sich durch Verstrecken orientieren läßt und mit Farbstoffen, die saure Gruppen enthalten, verträglich ist. Beispiele für solche Polymere sind Polyamide, Celluloseester, wie Celluloseacetat, Vinylacetathomo- und -copolymere, wobei als Comonomere Ethylen, Propylen, Crotonsäure, (Meth)acrylsäure, Maleinsäure und andere mit Vinylacetat copolymerisierbare Comonomere vorliegen können, sowie Polyvinylalkohole.

Als Polyvinylalkohol kommt jeder Polyvinylalkohol in Frage, der durch vollständige oder teilweise Verseifung von Polyvinylacetat hergestellt worden war, insbesondere ein Polyvinylalkohol (PVAL), bei dem 90 bis 100 mol-%, bevorzugt 95 bis 100 mol-% aller einpolymerisierten Monomereinheiten des Polymer Vinylalkoholeinheiten sind. Der Rest zu 100 mol-% aller Monomereinheiten besteht aus Monomereinheiten, wie Ethylen, Vinylacetat, Vinyltrifluoracetat und anderen für solche Copolymeren bekannten Comonomereinheiten. In bevorzugter Weise werden Polyvinylalkohole eingesetzt. Dies sind insbesondere solche Typen, die in 4 gew.-%iger wäßriger Lösung eine Viskosität von mehr als 4 mPa.sec², vorzugsweise eine Viskosität von 20 bis 70 mPa.sec², bei 20°C aufweisen; sie haben einen Verseifungsgrad von mehr als 80 mol-%, bevorzugt von 85 bis 100 mol-%.

Als Farbstoffe für die Farbstoffolien B eignen sich alle Farbstoffe, die den Folien die anspruchsgemäß definierten Eigenschaften verleihen, d.h. sie müssen die gereckte Folie dichroitisch machen. Der makroskopisch wahrnehmbare Dichroismus beruht auf der Ordnung dichroitischer, mikroskopischer Partikel. Diese können dem Polymer fertig, beispielsweise als Pigmente, von außen zugegeben werden, oder sie bilden sich erst durch den Prozeß der Folienherstellung. Letztere Variante ist bevorzugt, sie nutzt die Assoziationsfähigkeit bestimmter Moleküle aus. Im coloristischen Bereich wird diese Eigenschaft mit dem Begriff der Substantivität angenähert beschrieben (H.R. Schweizer, Künstliche organische Farbstoffe und ihre Zwischenprodukte, Springer Verlag Berlin (1964), S 481 ff).

Geeignete Farbstoffe gehören zur Gruppe der Direktfarbstoffe. Sie enthalten bevorzugt die Gruppen 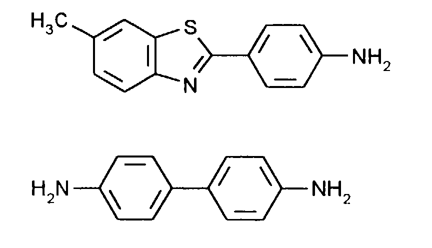 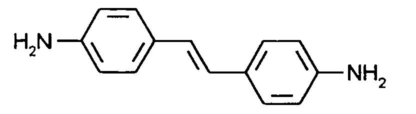 oder ihre Derivate, beispielsweise 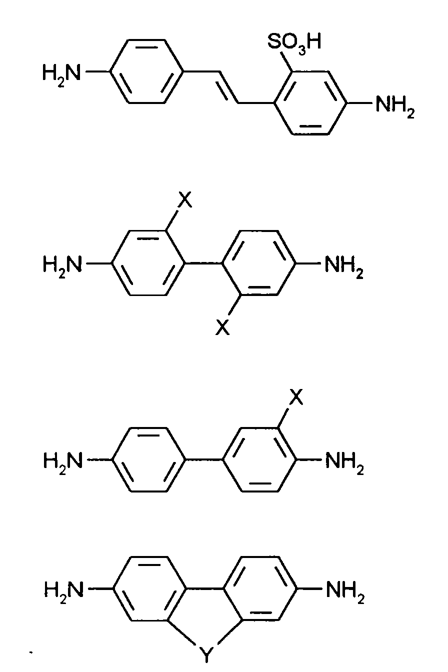 worin X für eine Sulfogruppe und Y für SO₂, NH oder CH₂ stehen. Bei den Diazokomponenten ist I-Säure besonders geeignet. Vorteilhaft ist es, die Verbindungen über die Aminogruppe mit dem Rest einer Dicarbonsäure zu verdoppeln oder die Metallkomplexverbindungen, vorzugsweise Cu-Komplexe, einzusetzen.

Der Begriff "Farbstoff" im Sinne der Erfindung umfaßt alle Verbindungen, die im Wellenbereich des sichtbaren Lichts absorbieren, also z.B. Polyene wie Polyacetylen und vorzugsweise Farbstoffe im engeren Sinn. Bevorzugte Farbstoffe werden beispielsweise in den DE-OS 36 15 765, 41 03 346, 42 27 521 und 42 27 522 beschrieben; vgl. auch die dort zitierte Literatur.

Die Farbstoffe können dem Polymer in jeder beliebigen Form zugesetzt werden, die eine homogene Verteilung erlaubt; meistens werden die Farbstoffe dem geschmolzenen oder gelösten Polymer zugesetzt, bevor aus dem Farbstoff-haltigen Polymer die Folie gefertigt wird.

Da die Folien aufgrund ihrer geringen Dicke in der Regel nicht mehr selbsttragend sind, werden sie im allgemeinen aus Lösung auf einem Trägermaterial gegossen. Vorzugsweise gießt man aus Lösungen einer Viskosität von 100 bis 600 mPa.s (gemessen bei 20°C) bei einer Temperatur von 35 bis 45°C in einer Naßfilmdicke von 100 bis 400, vorzugsweise 200 bis 300 µm, so daß eine Trockenschichtdicke von 5 bis 60, vorzugsweise von 8 bis 30, besonders bevorzugt 12 bis 25 µm resultiert.

Geeignete Substrate umfassen Cellulosederivate wie Celluloseacetat, -butyrat und -nitrat, Vinylpolymerisate wie Polystyrol und Polyvinylchlorid, Polyester wie Polycarbonat und Polyethylenterephthalat, sowie sogenanntes Trennpapier, wie es z.B. beim "Umkehrverfahren" bei der Textil- und Lederbeschichtung eingesetzt wird, d.h. mit Baryt oder einem Polyolefin (z.B. Polyethylen, Polypropylen, Ethylen/Butadien-Copolymerisat) kaschiertes Papier.

Die - im Falle von Polyvinylalkohol wäßrigen - Gießlösungen enthalten vorzugsweise 5 bis 10 Gew.-%, bezogen auf Lösung, Polymer und 0,1 bis 6, insbesondere 0,5 bis 4 Gew.-%, bezogen auf Feststoff, Farbstoff.

Die Gießlösungen können auch den Dichroismus verstärkende Synergisten enthalten; als besonders wirksam haben sich Verbindungen erwiesen, die auf das gelöste Polymer eine fällende Wirkung ausüben. Im Falle von in Wasser gelöstem Polyvinylalkohol sind geeignete Synergisten beispielsweise C₁-C₄-Alkohole wie Methanol, Ethanol und Isopropanol. Die Synergisten werden im allgemeinen in Mengen bis zu 15 Gew.-%, bezogen auf Gießlösung, eingesetzt.

Die Gießlösungen können weiterhin weichmachende Zusätze enthalten, was insbesondere für Polyvinylalkohol von Bedeutung ist. Bevorzugte weichmachende Verbindungen umfassen mehrwertige C₃-C₁₂-Alkohole mit 2 bis 6 Hydroxylgruppen pro Molekül, wie z.B. Ethylenglykol, Glycerin, Trimethylolethan, Trimethylolpropan, Pentaerythrit, Sorbit, Diethylenglykol und Triethylenglykol, Mono- und Di-C₁-C₆-alkylether von zwei- oder dreiwertigen C₄-C₁₂-Etheralkoholen, die auf C₂-C₄-Alkylenoxiden basieren, wie z.B. Ethylenglykolmonomethyl- und -ethylether, Ethylenglykoldimethyl- und -ethylether, Diethylenglykolmono- und -diethylether, C₃-C₁₂-Alkylamine wie n-Propylamin, C₂-C₆-Hydroxylamine wie Ethanolamin und n-Propanolamin, C₃-C₁₀-Amide wie Dimethylformamid, N-Methylpyrrolidon, Pyrrolidon und ε-Caprolactam, sowie deren Mischungen. Bevorzugte Mengen an weichmachenden Verbindungen liegen bei 0,05 bis 4 Gew.-%, bezogen auf Polymer (fest).

Es hat sich herausgestellt, daß Mischungen aus Synergisten und weichmachenden Verbindungen die Herstellung besonders vorteilhafter Folien erlauben. Besonders bevorzugte Mischungen enthalten Glycerin, Ethylenglykolmonomethylether, Ethylenglykoldimethylether und/oder Dimethylformamid einerseits und Methanol andererseits. Mischungen aus Glycerin und Methanol sind besonders bevorzugt. Das Gewichtsverhältnis Synergist/weichmachende Verbindung beträgt vorzugsweise 0,1 bis 10, insbesondere 1 bis 5.

Die Gießlösungen können zur Verbesserung der Benetzung oberflächenaktive Verbindungen enthalten, wie sie beispielsweise in "Methoden der Organischen Chemie" (Houben-Weyl), 4. Aufl., Bd. XIV/1, Georg Thieme Verlag, Stuttgart 1961, S. 190 f. beschrieben sind.

Bevorzugte oberflächenaktive Verbindungen umfassen beispielsweise C₈-C₁₈-n-Alkylsulfate, C₈-C₁₈-n-Alkyl-benzolsulfönate, C₈-C₁₈-n-Alkyl-trimethyl-ammoniumsalze, n-Di-C₈-C₁₈-alkyl-dimethyl-ammoniumsalze, C₈-C₁₈-n-Alkyl-carboxylate, C₈-C₁₈-n-Alkyl-dimethylaminoxide, C₈-C₁₈-n-Alkyl-dimethylphosphinoxide und - vorzugsweise - Oligoethylenglykol-mono-C₆-C₁₈-alkylether mit durchschnittlich 2 bis 30 Ethoxygruppen pro Molekül. Die n-Alkylreste können auch durch teilweise ungesättigte lineare aliphatische Reste ersetzt sein. Besonders bevorzugte oberflächenaktive Verbindungen sind Oligoethylenglykol-mono-C₁₀-C₁₄-alkylether mit durchschnittlich 4 bis 12 Ethoxygruppen pro Molekül, insbesondere Oligoethylenglykol-mono-C₁₂-alkylether mit durchschnittlich 8 Ethoxygruppen pro Molekül.

Besonders bevorzugte oberflächenaktive Verbindungen umfassen Sulfonsäuren, wie Alkansulfonsäuren, insbesondere Sulfobernsteinsäure-octylester, Perfluoralkansulfonsäuren, insbesondere Perfluoroctansulfonsäure und ihr Tetraalkylammoniumsalz, beispielsweise das Tetraethylammoniumsalz, Sulfate insbesondere sulfatierte Alkylphenoipolyglykolether oder Alkylsulfonate, amphotere Tenside, insbesondere Alkanamido-propylbetaine, beispielsweise Lauramidopropylbetain oder die in CA mit den folgenden REG-Nr. aufgeführten Verbindungen: 73772-45-9, 96565-37-6, 4292-10-8, 59272-84-3, 25729-05-9, 6179-44-8, 21244-99-5, 58793-79-6, 32954-43-1, 92836-76-5, oder nichtionische Tenside wie 4-Octylphenolpolyglykolether.

Die Gießlösungen können die oberflächenaktiven Verbindungen in Mengen von 0,001 bis 1, vorzugsweise 0,005 bis 0,1 Gew.-%, bezogen auf Gießlösung, enthalten.

Nach dem Gießen wird der Naßfilm - vorzugsweise in einem Gasstrom, insbesondere einem Luftstrom - getrocknet. Die isotrope Extinktion der ungerechten Folien kann 0,1 bis 3,5, vorzugsweise 0,5 bis 3,0, gemessen im Absorptionsmaximum, betragen. Die Folie kann dann vom Substrat abgezogen und gereckt werden. Das Recken erfolgt vorzugsweise bei erhöhter Temperatur, z.B. bei 90 bis 180°C. Das Reckverhältnis beträgt vorzugsweise 4:1 bis 8:1.

Die gereckte Folie kann auf das Glas aufgepreßt oder aufgeschmolzen werden.

Die Dimensionen der Polarisationsfolie sind unmittelbar nach dem Recken instabil, weil die Folie unter Verlust von optischer Güte relaxiert. Sie läßt sich durch Tempern unter Spannung bei Temperaturen zwischen 150 und 250°C unter Erhalt ihrer Eigenschaften fixieren. Hiermit kann ein Austrocknungsprozeß verbunden sein, der zu einer extrem leichten Fibrillierung der Bahn führt, wodurch sie unbrauchbar wird. In diesem Zustande läßt sich das Material nur unter großen Schwierigkeiten handhaben, weil die Empfindlichkeit gegen mechanische Beanspruchung senkrecht zur Zugrichtung beträchtlich ist.

Diese Instabilität läßt sich wirksam überwinden, indem man entweder die Glasfolie oder die gereckte Folie vor dem Tempern mit einem Kleber beschichtet, der die Folie während des Temperprozesses auf dem Glas hält. Bevorzugt ist ein thermoplastischer Kleber, der bei der Tempertemperatur erweicht, nach dem Abkühlen erhärtet und das System untrennbar verklebt. Bevorzugt geeignet sind hier Kleber auf Polyurethanbasis, wie sie beispielsweise in der DE-AS 26 44 434 beschrieben sind.

Die fixierte Folie ist hervorragend temperaturbeständig und in ihren optischen Eigenschaften nur durch die thermische Beständigkeit des Polymeren beschränkt.

Weiterer Gegenstand der Erfindung ist also ein Verfahren zur Herstellung der obigen Laminate, wonach man auf einem Träger eine Farbstoffolie mit einer Trockenschichtdicke von 5 bis 60, vorzugsweise 8 bis 30 µm gießt, die Folie vom Substrat abzieht und monoaxial im Verhältnis 4:1 bis 8:1 reckt, die gereckte Folie auf eine Glasfolie aufpreßt, aufschmilzt oder aufklebt und das erhaltene Laminat bei einer Temperatur von 150 bis 250°C tempert.

Nach dem Zusammenführen der beiden Folien hat das Laminat zwei verschiedenartige Oberflächen. Die Polarisationsfolie kann beliebig abgedeckt werden. Beispielhaft genannt seien die Verklebung mit einer zweiten Folie aus Mineralglas oder einem optisch isotropen Kunststoff, was teuer ist, aber in bestimmten Fällen von Vorteil sein kann, beispielsweise wenn der Ausschluß von Wasser oder Sauerstoff strikt verlangt wird. Bevorzugt ist die Lackierung mit einem transparenten Lack, wobei Reaktivlacke bevorzugt sind.

Die Glasseite des Verbunds kann in der üblichen Weise weiterverarbeitet werden, wobei Temperaturen über 250°C zu vermeiden sind. Es kann sich deswegen als vorteilhaft erweisen, die Glasseite schon vorher mit thermisch anspruchsvollen Ausrüstungen zu versehen, beispielsweise mit Orientierungs- oder Leitfähigkeitsschichten.

Es ist ein besonderer Vorzug des neuen Verbundmaterials, daß es wickelbar ist. Es kann von der Rolle oder in Stücken verarbeitet werden.

Die Dicke und damit auch das Gewicht des erfindungsgemäßen Verbundmaterials wird von der Schichtdicke des Dünnglases bestimmt. Es sind mit sehr dünnen Qualitäten, beispielsweise 50 µm, Displayaufbauten möglich, deren Dicke insgesamt geringer als die eines einzigen Polarisators mit herkömmlichem Aufbau ist. Es sind also Gewichte und Schichtdicken in bisher unerreicht geringen Größenordnungen möglich.

Weiterhin läßt sich das erfindungsgemäße Verbundmaterial mit den Materialien des herkömmlichen Fertigungsprozesses einfach kombinieren.

Das Material dient zur Herstellung von flächenhaften Anzeigevorrichtungen, die mit polarisiertem Licht betrieben werden, vorzugsweise von Displays.

Weiterer Gegenstand der Erfindung ist also die Verwendung dieses Verbundmaterials zur Herstellung optoelektronischer Instrumente.

Die Prozentangaben der nachfolgenden Beispiele beziehen sich auf das Gewicht.

### Beispiele

### Beispiel 1

Eine wäßrige 8 %ige PVA-Lösung (PVA = Polyvinylalkohol) enthält 1,875 % (bezogen auf PVA; Gehalt 90 % Wirkstoff) des Farbstoffs "Cyan" folgender Formel: 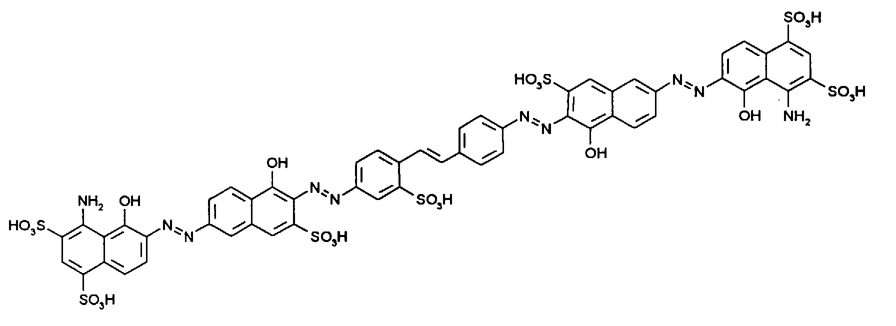 und ein anionisches Tensid (Saponin, 4 %ig. wäßrig; 20 ml/l Gießlösung). Der Farbstoff wird nach DE-OS 41 03 346, Beispiel 4 hergestellt. Man gießt eine Bahn mit einem Naßauftrag von 268 µm aus einer Lösung der Viskosität von 190 mPa.s bei 35°C auf 120 µm Cellulosetriacetat. Nach dem Trocknen ist der Auftrag 18 µm dick. Die Bahn wird bei 140°C im Verhältnis 4,5:1 gereckt und aufgewickelt.

Ein Dünnglas (Format 100 x 200 mm und 100 µm Dicke) wird mit einer 3 %igen Kleberlösung (nach Beispiel 1 der DE-OS 26 44 434 hergestellt und als Lösung in Methylenchlorid eingesetzt) berakelt und die Klebstoffschicht 10 min bei 200°C getrocknet. Man bringt ein passendes Stück der Polarisatorbahn unter Spannung an das Dünnglas und drückt mit einer Walze an. Man erhitzt 10 min auf 210°C, wobei sich der Verbund bildet. Nach dem Erkalten wird die Seite mit dem PVA-Film mit einem Lack verschlossen. Man erhält eine biegsame, sehr dünne Polarisatorfolie.

### Beispiele 2 bis 4

Ähnliche Ergebnisse wie nach Beispiel 1 erhält man, wenn man den Farbstoff des Beispiels 1 durch
2) den gemäß Beispiel 1 der DE-OS 42 27 521 hergestellten Farbstoff ("Magenta"),
3) den gemäß Beispiel 3 der DE-OS 42 27 522 hergestellten Farbstoff ("Gelb") und
4) eine Mischung im Gewichtsverhältnis Cyan/Magenta/Gelb = 1:0,2:0,8 ersetzt.

## Patentansprüche

1. Laminat aus
A. Glasfolie einer Dicke von 10 bis 200 µm und
B. einer dichroitischen Farbstoffolie einer Dicke von 5 bis 60 µm, deren Extinktion im linear polarisierten Licht, gemessen an zwei übereinanderliegenden Folien im Absorptionsmaximum, bei aufeinander senkrecht stehenden optischen Achsen 0,1 bis 6,0 und bei parallelen optischen Achsen 0,03 bis 0,2 beträgt.

2. Laminat nach Anspruch 1, dessen Farbstoffolie B 9 bis 30 µm dick ist.

3. Laminat nach Anspruch 1, wobei die Extinktion der Farbstoffolie B in linear polarisiertem Licht, gemessen an zwei übereinanderliegenden Folien im Absorptionsmaximum, bei aufeinander senkrecht stehenden optischen Achsen 2,0 bis 4,5 beträgt.

4. Verfahren zur Herstellung der Laminate nach Ansprüchen 1 bis 3, wonach man auf einem Träger eine Farbstoffolie mit einer Trockenschichtdicke von 10 bis 35 µm gießt, die Folie vom Substrat abzieht und monoaxial im Verhältnis 4:1 bis 8:1 reckt, die gereckte Folie auf eine Glasfolie aufpreßt, aufschmilzt oder aufklebt und das erhaltene Laminat bei einer Temperatur von 150 bis 250°C tempert.

5. Verwendung der Laminate nach Ansprüchen 1 bis 3 zur Herstellung optoelektronischer Instrumente.
